# EUROPÄISCHE PATENTANMELDUNG

(11) **EP 0 694 568 A2**
(43) Veröffentlichungstag der Anmeldung: **31.01.1996**
(21) Anmeldenummer: 95110786.1
(22) Anmeldetag: 11.07.1995
(51) Int. Cl.: C08F 232/08, C09D 145/00

(54) **Cycloolefincopolymere und ein Verfahren zu ihrer Herstellung**

(30) Priorität: 26.07.1994 DE 4426398
(71) Anmelder: HOECHST AKTIENGESELLSCHAFT, D-65929 Frankfurt am Main (DE); Mitsui Petrochemical Ind., Ltd., Tokyo 100 (JP)
(72) Erfinder: Osan, Frank, Dr., D-65779 Kelkheim (DE); Kulpe, Jürgen, Dr., D-65929 Frankfurt (DE); Kreuder, Willi, Dr., D-55126 Mainz (DE)
(74) Vertreter: Aulmich, Gerhard, Dr.

(57) **Zusammenfassung**

Die vorliegende Erfindung betrifft ein Cycloolefincopolymer mit einer Lösungsviskosität (eta) > 0.25 dl/g (gemessen gemäß DIN 53 728 in Decalin bei 135°C), enthaltend polymerisierte Einheiten (A) mindestens eines cyclischen Olefins und (B) gegebenenfalls eines oder mehrerer acyclischer Olefine, dadurch gekennzeichnet, daß (C) polymerisierte Einheiten enthalten sind, welche mindestens eine funktionalisierte Struktureinheit enthalten, die sich
a) von einem cyclischen Olefin ableitet und mindestens ein Heteroatom enthält, das direkt an ein Ringatom des cyclischen Olefins gebunden ist, oder
b) von einem cyclischen oder acyclischen Olefin ableitet und mindestens eine Atomgruppe enthält, die zwei Heteroatome aufweist, die beide an dasselbe Kohlenstoff-Atom gebunden sind, oder
c) von einem cyclischen oder acyclischen Olefin ableitet und mindestens eine Aldehyd-Gruppe enthält, oder
d) von einem cyclischen oder acyclischen Olefin ableitet und mindestens eine Atomgruppe enthält, in der ein Stickstoff-Atom über eine Doppelbindung an ein Kohlenstoff-Atom gebunden ist,
wobei für den Fall, daß sich die funktionalisierte Struktureinheit von einem cyclischen Olefin ableitet, genau zwei einander benachbarte Kohlenstoff-Atome dieser funktionalisierten cyclischen Struktureinheit in die Polymerhauptkette eingebaut sind. Das Cycloolefincopolymer eignet sich als Überzugsmaterial oder als Haftvermittler.

## Beschreibung

Die Erfindung bezieht sich auf funktionalisierte Cycloolefincopolymere (COC) mit einer Lösungsviskosität (eta) > 0.25 dl/g, die geeignet sind zur Herstellung von hochkratzfesten Beschichtungs- und Überzugsmaterialien wie beispielsweise Lacken oder als Haftvermittler, beispielsweise in Ein- oder Zweikomponenten-Bindemittel enthaltenden Beschichtungsmitteln. Die Erfindung bezieht sich ferner auf ein Verfahren zur Herstellung derartig funktionalisierter COC.

Im Bereich der Automobilindustrie kommt den Karosseriedeck- und klarlacken neben der klassischen Korrosionsschutzfunktion und der Dekoration eine zentrale Rolle in Bezug auf die Beständigkeit gegenüber Umwelteinflüssen zu. Als äußere Schicht muß z.B. der Klarlack gegenüber Licht, sauren Komponenten und Chemikalien, wie Streusalz, Ölruß, Kraftstoffen und Waschmitteln, aber auch gegenüber mechanischer Beanspruchung (z.B. in automatischen Waschanlagen) beständig sein. Außerdem wird eine gute Glanzhaltung sowie Kreidungsfestigkeit und Farbtonkonstanz gefordert. Darüber hinaus müssen die einzelnen Lackschichten untereinander so abgestimmt werden, daß es nicht zu einer Ablösung einzelner Komponenten und damit zur Funktionsstörung des Gesamtlacksystems kommt. Eine entscheidende Rolle kommt dabei auch dem zu lackierenden Substrat zu. Der Lack muß eine ausreichende Haftung auf der Werkstückoberfläche zeigen.

Unter besonderer Berücksichtigung umweltrelevanter Problemstellungen wurden in den letzten Jahren neue Deck- und/oder Klarlacke entwickelt. Insbesondere sind dabei die sogenannten "High Solids" sowie die Wasserlacke hervorzuheben, welche aufgrund ihres geringen bzw. fehlenden Anteils an organischen Lösungsmitteln geringere umweltbelastende Emissionen bei der Verarbeitung gewährleisten (Organic coatings, Science and Technology, 8 (1986), G.D. Parfitt, A.V. Patsis (Hrsg.)). Außer Alkyd-Melaminharzlacken kommen dabei insbesondere wärmehärtbare Acrylharze zum Einsatz. Der ausgezeichneten Leistungsfähigkeit dieser Systeme in Bezug auf z.B. die Verarbeitbarkeit und Glanzhaltung sowie Farbtonbeständigkeit stehen eine geringe Hydrolysebeständigkeit und eine nicht in allen Punkten befriedigende Oberflächenhärte entgegen. Darüber hinaus sind die Hafteigenschaften der Lacksysteme sehr empfindlich von dem zu lackierenden Substrat abhängig. In den meisten Fällen ist eine entsprechende Vorbehandlung der Substratoberfläche erforderlich.

Die Entwicklung neuer Lacksysteme mit substratspezifischen Eigenschaften ist nach wie vor von großer Bedeutung.

Aus EP 283 164 ist bekannt, daß durch Copolymerisation von α-Olefinen mit cyclischen Polyenen und gegebenenfalls Cycloolefinen doppelbindungshaltige COC zur Verfügung gestellt werden können, wobei als cyclische Polyene beispielsweise nicht-konjugierte Di- oder Triene verwendet werden, die Norbornen als Strukturelement enthalten. Aus JP 05279412-A ist bekannt, daß in solche doppelbindungshaltigen COC durch Epoxidierung Hydroxy- und/oder Epoxygruppen eingeführt werden können, wobei die erhaltenen funktionalisierten COC als Verträglichkeitsvermittler für olefinische PolymerBlends dienen.

Aus JP 2269760-A, JP 3072558-A und JP 3106962-A sind polycyclische Monomere bekannt, die Carboxy-Gruppen enthalten und durch Metathese-Polymerisation zu Homo- und Copolymeren umgesetzt werden. Der Nachteil einer solchen ringöffnenden Polymerisation besteht jedoch darin, daß das zunächst erhaltene Polymerisat Doppelbindungen aufweist, die zu unkontrollierten und unerwünschten Kettenvernetzungen führen können und damit die Verarbeitbarkeit des Materials durch Extrudieren oder Spritzgießen erheblich einschränken.

Aus EP-A-203 799 sind COC bekannt, auf die in einer polymeranalogen Reaktion α,β-ungesättigte Carbonsäuren wie beispielsweise Acrylsäure aufgepfropft werden. In EP-A-570126 wird ferner beschrieben, daß doppelbindungshaltige COC mit zur radikalischen Polymerisation geeigneten Monomeren, wie z.B. Styrol, Vinylchlorid, Acrylnitril oder Vinylacetat gepfropft werden. Diese polymeranalogen Pfropfungsreaktionen haben jedoch den Nachteil, daß die dabei erhaltenen Produkte hinsichtlich der Pfropfausbeute, den Pfropfungsstellen und der Kettenlänge der Pfropfungsäste uneinheitlich sind. Zudem ist die eigentliche Pfropfungsreaktion oft von einer Homopolymerisation des eingesetzten Monomeren begleitet. Homopolymere und Pfropfprodukt sind in den meisten Fällen nicht mehr trennbar. Die erhaltenen Reaktionsprodukte weisen daher eine sehr breite Molekulargewichtsverteilung auf und sind zudem chemisch uneinheitlich. Für die Entwicklung von Lacken mit hohem Festkörperanteil ("High solids") werden jedoch Produkte angestrebt mit möglichst enger Molekulargewichtsverteilung und steuerbarer Anzahl funktioneller Gruppen.

Es bestand somit die Aufgabe, ein mit anderen Stoffen, insbesondere Polymeren, gut mischbares Polymer zur Verfügung zu stellen, das zur Herstellung von hochkratzfesten, säure- und basenbeständigen Überzügen, beispielsweise Automobillacken, mit verbesserter Haftfestigkeit zur Substratoberfläche geeignet ist.

Überraschend wurde gefunden, daß diese Aufgabe gelöst werden kann durch die Bereitstellung bestimmter funktionalisierter COC. Die erfindungsgemäßen funktionalisierten COC enthalten polymerisierte Einheiten, die funktionelle Gruppen enthalten, welche durch eine polymeranaloge Ozonolyse-Reaktion mit anschließender Aufarbeitung und gegebenenfalls durch spezielle Folgereaktionen eingeführt werden.

Die Erfindung betrifft somit ein Cycloolefincopolymer mit einer Lösungsviskosität (eta) > 0.25 dl/g (gemessen gemäß DIN 53728 in Decalin bei 135°C), welches polymerisierte Einheiten (A) mindestens eines cyclischen Olefins und (B) gegebenenfalls eines oder mehrerer acyclischer Olefine enthält, dadurch gekennzeichnet, daß (C) polymerisierte Einheiten enthalten sind, welche mindestens eine funktionalisierte Struktureinheit enthalten, die sich
a) von einem cyclischen Olefin ableitet und mindestens ein Heteroatom enthält, das direkt an ein Ringatom des cyclischen Olefins gebunden ist, oder
b) von einem cyclischen oder acyclischen Olefin ableitet und mindestens eine Atomgruppe enthält, die zwei Heteroatome aufweist, die beide an dasselbe Kohlenstoff-Atom gebunden sind, oder
c) von einem cyclischen oder acyclischen Olefin ableitet und mindestens eine Aldehyd-Gruppe enthält, oder
d) von einem cyclischen oder acyclischen Olefin ableitet und mindestens eine Atomgruppe enthält, in der ein Stickstoff-Atom über eine Doppelbindung an ein Kohlenstoff-Atom gebunden ist,
wobei für den Fall, daß sich die funktionalisierte Struktureinheit von einem cyclischen Olefin ableitet, genau zwei einander benachbarte Kohlenstoff-Atome dieser funktionalisierten cyclischen Struktureinheit in die Polymerhauptkette eingebaut sind.

Die Atomgruppen der funktionalisierten Struktureinheiten gemäß b) und d) bzw. die Aldehyd-Gruppe der funktionalisierten Struktureinheit gemäß c) können direkt oder über eine Kohlenwasserstoff-Gruppe mit 1 bis 20 Kohlenstoffatomen, bevorzugt eine gegebenenfalls alkyl- oder arylsubstituierte C₁-C₁₀-Alkylengruppe, an die cyclischen oder acyclischen Olefinkomponenten gebunden sein.

Unter Heteroatom werden mit Ausnahme von Kohlenstoff und Wasserstoff alle Elemente des Periodensystems der Elemente verstanden, vorzugsweise Sauerstoff, Schwefel, Stickstoff, Phosphor und Silizium und insbesondere Sauerstoff, Schwefel und Stickstoff. In strenger Anlehnung an die IUPAC-Nomenklatur wird unter der Polymerhauptkette die durchgängige Hauptkette des Polymers verstanden, welche ein Substitutionsmuster besitzen kann (G. Odian: "Principles of Polymerization", second edition, 1981, S.12). Polypropylen beispielsweise besitzt demzufolge eine Polyethylen-Hauptkette, wobei an jedem zweiten Kohlenstoffatom ein Wasserstoffatom durch eine Methyl-Gruppe substituiert ist.

Das erfindungsgemäße Cycloolefincopolymer enthält vorzugsweise
0,1-99,89 Gew.-%, bezogen auf die Gesamtmasse des Cycloolefincopolymers, polymerisierte Einheiten (A) mindestens eines cyclischen Olefins,
0-80 Gew.-%, bezogen auf die Gesamtmasse des Cycloolefincopolymers, polymerisierte Einheiten (B) mindestens eines acyclischen Olefins und
0,01-50 Gew.-%, bezogen auf die Gesamtmasse des Cycloolefincopolymers, polymerisierte Einheiten (C), welche mindestens eine funktionalisierte Struktureinheit enthalten, die sich
a) von einem cyclischen Olefin ableitet und mindestens ein Heteroatom enthält, das direkt an ein Ringatom des cyclischen Olefins gebunden ist, oder
b) von einem cyclischen oder acyclischen Olefin ableitet und mindestens eine Atomgruppe enthält, die zwei Heteroatome aufweist, die beide an dasselbe Kohlenstoff-Atom gebunden sind, oder
c) von einem cyclischen oder acyclischen Olefin ableitet und mindestens eine Aldehyd-Gruppe enthält, oder
d) von einem cyclischen oder acyclischen Olefin ableitet und mindestens eine Atomgruppe enthält, in der ein Stickstoff-Atom über eine Doppelbindung an ein Kohlenstoff-Atom gebunden ist,
wobei für den Fall, daß sich die funktionalisierte Struktureinheit von einem cyclischen Olefin ableitet, genau zwei einander benachbarte Kohlenstoff-Atome dieser funktionalisierten cyclischen Struktureinheit in die Polymerhauptkette eingebaut sind.
Die polymerisierten Einheiten (A) leiten sich bevorzugt ab von Cycloolefinen der Formeln (I), (II), (III), (IV), (V), (VI) und (VII) 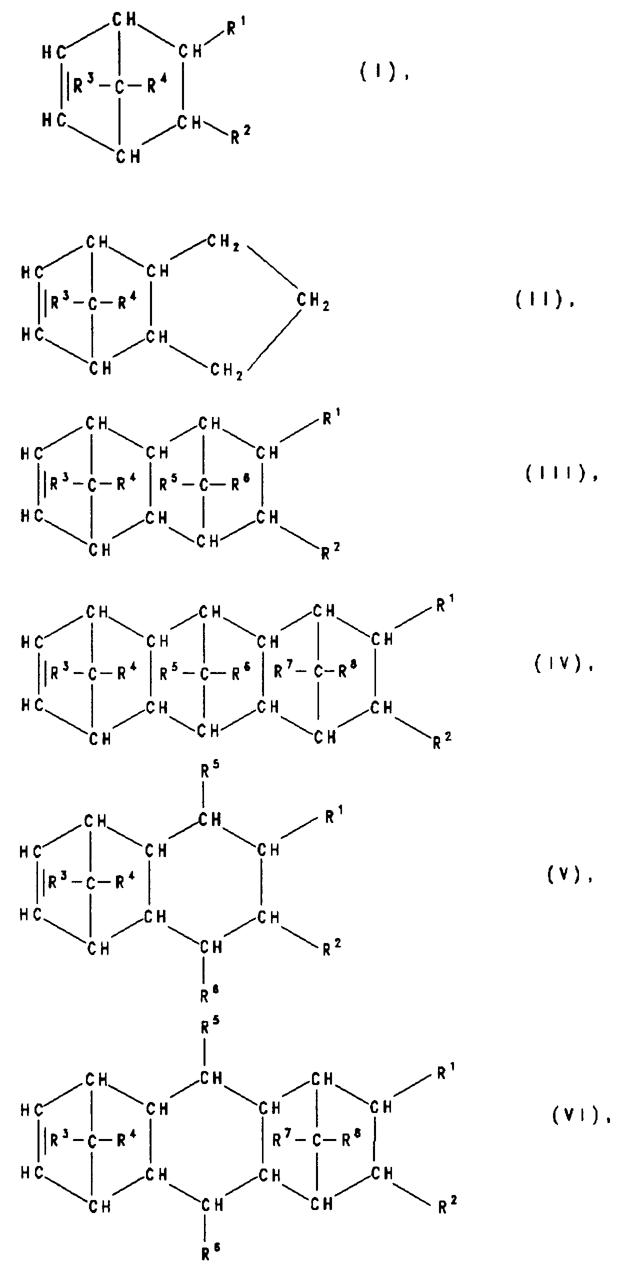 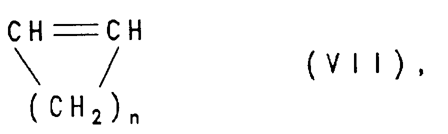
worin R¹, R², R³, R⁴, R⁵, R⁶, R⁷ und R⁸ gleich oder verschieden sind und ein Wasserstoffatom oder einen C₁-C₃₀ Kohlenwasserstoffrest, wie eine C₁-C₈-Alkyl-Gruppe oder eine C₆-C₁₄-Aryl-Gruppe, bedeuten, wobei gleiche Reste in den verschiedenen Formeln eine unterschiedliche Bedeutung haben können, und n eine Zahl von 2 bis 10 ist.
Besonders bevorzugt leiten sich die polymerisierten Einheiten (A) von Norbornen ab.

Die polymerisierten Einheiten (B) leiten sich bevorzugt ab von acyclischen Mono-Olefinen, z.B. α-Olefinen mit 2 bis 20 C-Atomen, insbesondere Ethylen und Propylen.

Die polymerisierten Einheiten (C) leiten sich bevorzugt ab von Verbindungen der Formeln (XIV), (XV), (XVI), (XVII), (XVIII) und (XIX) 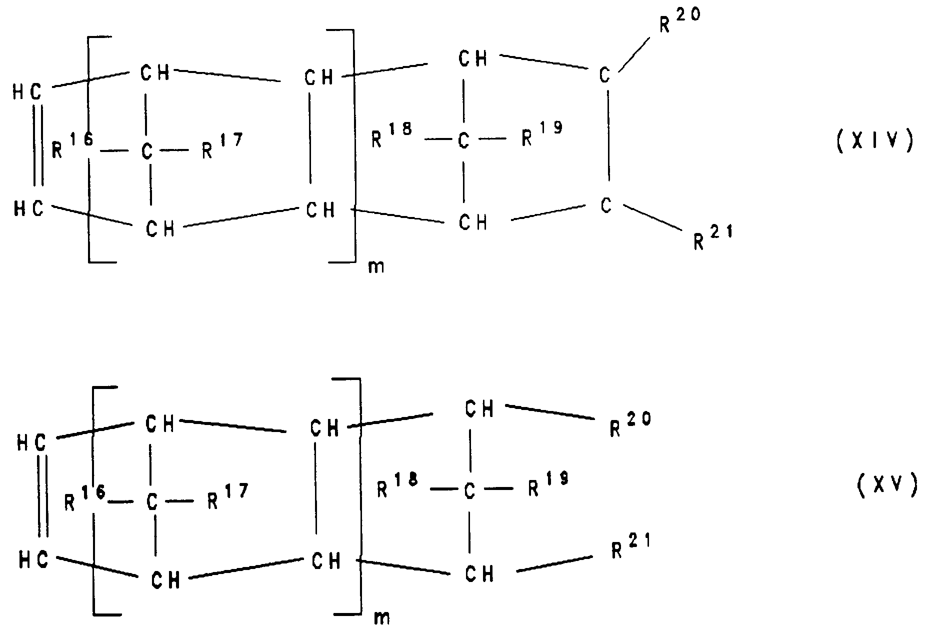 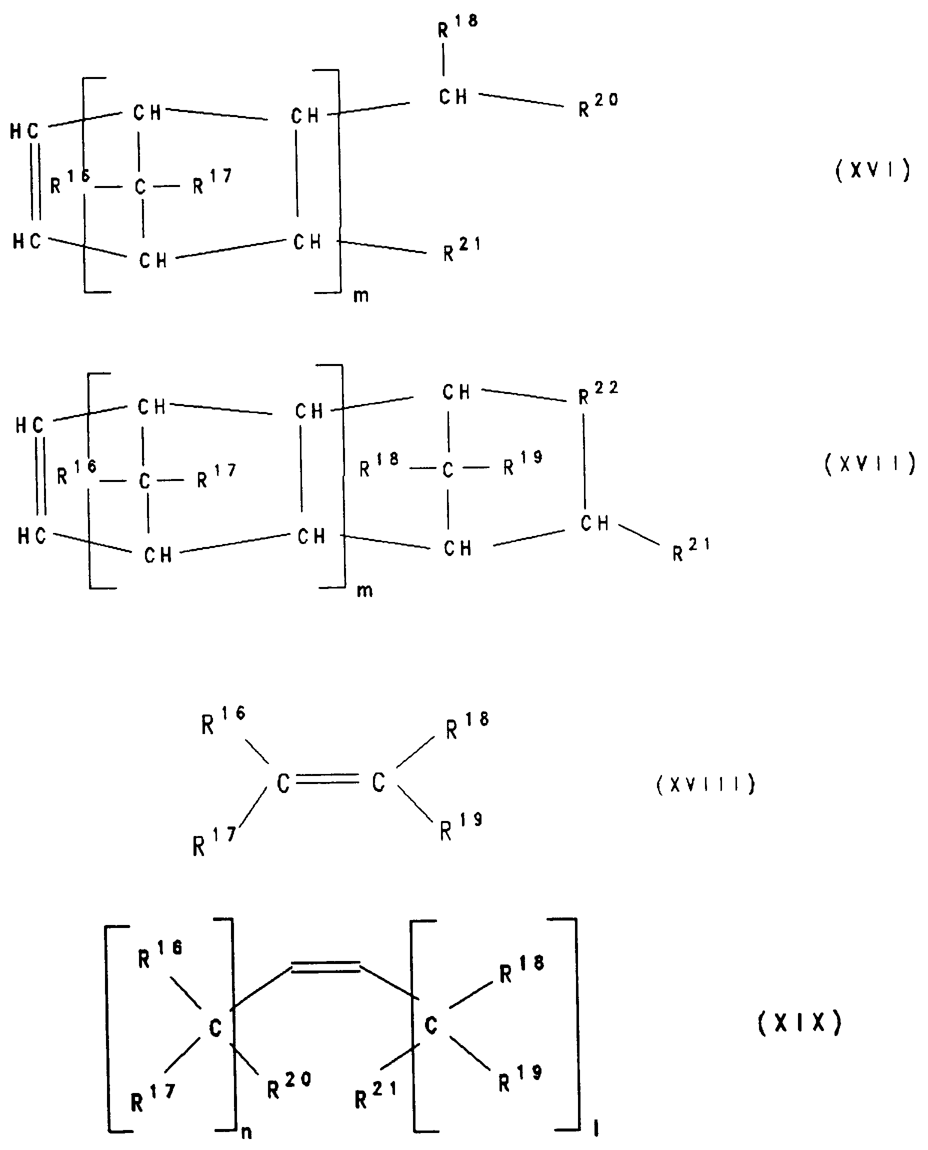
worin R¹⁶, R¹⁷, R¹⁸, R¹⁹, R²⁰ und R²¹ gleich oder verschieden sind, gleiche Reste in den verschiedenen Formeln unterschiedliche Bedeutungen haben können und Wasserstoff, einen C₁-C₃₀ Kohlenwasserstoffrest, wie eine C₁-C₈-Alkyl-Gruppe oder eine C₆-C₁₄-Aryl-Gruppe, eine primäre-, sekundäre- oder tertiäre Amino-Gruppe, eine substituierte oder unsubstituierte Ammonium-Gruppe, eine Hydroxy-Gruppe, eine Alkyloxy-Gruppe, eine Aryloxy-Gruppe, eine Aralkyloxy-Gruppe oder eine Gruppe -(X)ₚ-Y bedeuten, wobei X eine verzweigte oder unverzweigte C₂-C₂₀-Alkylen-Gruppe oder eine verzweigte oder unverzweigte C₈-C₂₀-Arylalkylen-Gruppe und p=0 oder 1 ist und Y eine Carboxy-Gruppe, eine Alkyloxycarbonyl-Gruppe, eine Carbamoyl-Gruppe, eine Mono- oder Bisalkylcarbamoyl-Gruppe, eine Chlorformyl-Gruppe, eine Acyloxycarbonyl-Gruppe, eine Thiocarboxy-Gruppe, eine Alkylthiocarbonyl-Gruppe, eine Formyl-Gruppe, eine Alkylformyl-Gruppe, eine Hydroxybis(alkyloxy)-methyl-Gruppe, eine Tris(alkyloxy)methyl-Gruppe, eine Hydroxyiminomethyl-Gruppe, eine Hydrazonomethyl-Gruppe oder eine Semicarbazonomethyl-Gruppe ist, wobei in den Formeln (XIV) und (XVIII) mindestens einer der Reste R¹⁶, R¹⁷, R¹⁸, R¹⁹, R²⁰ oder R²¹, in den Formeln (XV), (XVI) und (XIX) mindestens zwei der Reste R¹⁶, R¹⁷, R¹⁸, R¹⁹, R²⁰ oder R²¹ und in Formel (XVII) keiner der Reste R¹⁶, R¹⁷, R¹⁸, R¹⁹, R²⁰ und R²¹ eine Gruppe -(X)ₚ-Y, eine primäre, sekundäre oder tertiäre Amino-Gruppe, eine substituierte oder unsubstituierte Ammoniumgruppe, eine Hydroxy-Gruppe, eine Alkyloxy-Gruppe, eine Aryloxy-Gruppe oder eine Aralkyloxy-Gruppe sein müssen.
R²² ist eine Carbonyl-Gruppe, eine Hydroxyiminomethyl-Gruppe, eine Hydrazonomethyl-Gruppe oder eine Semicarbazonomethyl-Gruppe.

In den Formeln (XV) und (XVI) ist p=0, wenn R²⁰ oder R²¹ eine Gruppe -(X)ₚ-Y darstellen. In Formel (XIX) sind R²⁰ und R²¹ nicht Wasserstoff oder ein C₁-C₃₀ Kohlenwasserstoffrest, wie eine C₁-C₈-Alkyl-Gruppe oder eine C₆-C₁₄-Aryl-Gruppe.

Die polymerisierten Einheiten (C) leiten sich besonders bevorzugt ab von Verbindungen der Formeln (XIV) bis (XIX), worin R²² eine Carbonyl-Gruppe ist und R¹⁶, R¹⁷, R¹⁸, R¹⁹, R²⁰ und R²¹ gleich oder verschieden sind, gleiche Reste in den verschiedenen Formeln unterschiedliche Bedeutungen haben können und eine primäre-, sekundäre- oder tertiäre Amino-Gruppe, eine Hydroxy-Gruppe oder eine Gruppe -(X)ₚ-Y bedeuten, worin X eine verzweigte oder unverzweigte C₂-C₂₀ Alkylen-Gruppe oder eine verzweigte oder unverzweigte C₈-C₂₀-Arylalkylen-Gruppe und p=0 oder 1 ist und Y eine Carboxy-Gruppe oder eine Formyl-Gruppe ist, wobei in den Formeln (XIV) und (XVIII) mindestens einer der Reste R¹⁶, R¹⁷, R¹⁸, R¹⁹, R²⁰ oder R²¹, in den Formeln (XV), (XVI) und (XIX) mindestens zwei der Reste R¹⁶, R¹⁷, R¹⁸, R¹⁹, R²⁰ oder R²¹ und in Formel (XVII) keiner der Reste R¹⁶, R¹⁷, R¹⁸, R¹⁹, R²⁰ und R²¹ eine primäre-, sekundäre- oder tertiäre Amino-Gruppe, eine Hydroxy-Gruppe oder eine Gruppe - (X)ₚ-Y ist, worin X eine verzweigte oder unverzweigte C₂-C₂₀ Alkylen-Gruppe oder eine verzweigte oder unverzweigte C₈-C₂₀-Arylalkylen-Gruppe und p=0 oder 1 ist und Y eine Carboxy-Gruppe oder eine Formyl-Gruppe ist.

Die Erfindung betrifft weiterhin ein Verfahren zur Herstellung eines Cycloolefincopolymeren mit einer Lösungsviskosität (eta) >0.25 dl/g, dadurch gekennzeichnet, daß ein doppelbindungshaltiges Cycloolefincopolymer in einem inerten Lösungsmittel mit Ozon umgesetzt wird.

Zur Durchführung des erfindungsgemäßen Verfahrens wird das doppelbindungshaltige COC in einem inerten Lösungsmittel gelöst. Als inerte Lösungmittel können aliphatische Kohlenwasserstoffe, beispielsweise Decalin, halogenierte aliphatische Kohlenwasserstoffe, beispielsweise Chloroform oder Tetrachlorkohlenstoff, Methanol oder Eisessig eingesetzt werden. Die Ozonbegasung wird in einem geeigneten Reaktionsgefäß, z.B. einem begasten Rührkessel oder einer Blasensäule durchgeführt. Dabei wird eine dem Doppelbindungsanteil des COC äquimolare Menge Ozon in die Lösung eingeleitet. Das Ozon wird mit einem Ozonerzeuger in trockener Luft oder Sauerstoff hergestellt. Die verwendete Ozonkonzentration im Trägergas Luft oder Sauerstoff ist für die erfindungsgemäße Reaktionsführung nicht kritisch. Sie beträgt typischerweise 1 bis 180 g/m³, bevorzugt 10 bis 50 g/m³. Sie wird in der Praxis so gewählt, daß eine möglichst vollständige Ozonaufnahme stattfindet. Die Ozonaufnahme kann durch ein geeignetes Meßgerät, z.B. ein UV-Photometer, verfolgt werden. Um einen Molmassenabbau des COC zu vermeiden, ist es günstig, die Ozonbegasung bei tiefer Temperatur durchzuführen. Diese liegt zwischen -78 und + 10°C, bevorzugt zwischen -10 und 0°C.
Wegen der Vernetzungsneigung der als Edukte verwendeten doppelbindungshaltigen COC bei höheren Temperaturen kann der Zusatz eines geeigneten, unter den gewählten Bedingungen nicht chemisch reagierenden Inhibitors vorteilhaft sein. Geeignet sind z.B. Phenothiazin und Nitroaromaten,wie Nitrobenzol und Dinitrobenzol (US 4,082,493).

Nach Abschluß der Ozonolyse wird zur Vermeidung der Bildung sogenannter Ozonide eine geringe Menge Alkohol, z.B. Methanol, oder auch Wasser in die Lösung gegeben.

Die oxidative Aufarbeitung wird mit Peroxycarbonsäuren, z.B. der Ameisen-, Essig- oder Propionsäure durchgeführt. Dabei kann die Gleichgewichtspersäure verwendet werden oder die Persäure in situ, durch Zugabe der Carbonsäure und einer entsprechenden Menge Wasserstoffperoxid sowie einer katalytischen Menge Mineralsäure hergestellt werden. Die Persäuremenge wird im Überschuß eingesetzt,wobei der Überschuß mit größerer Ansatzmenge kleiner wird. Pro Mol Doppelbindung im COC werden 1 bis 3, besonders bevorzugt 1,1 bis 1,8 Moläquivalente Persäure eingesetzt. Zur Vervollständigung der oxidativen Aufarbeitung wird die Lösung mehrere Stunden zum Rückfluß erwärmt. Die primären Produkte der oxidativen Aufarbeitung sind COC mit Carbonsäuregruppen.

Die reduktive Aufarbeitung wird mit Reduktionsmitteln wie Zinkstaub in Essigsäure oder über eine katalytische Hydrierung mit Palladium auf Calciumcarbonat oder Natriumdithionit durchgeführt. Das Reduktionsmittel wird im Überschuß eingesetzt. Pro Mol Doppelbindung werden 1 bis 4, besonders bevorzugt 1,2 bis 2,2 Moläquivalente Reduktionsmittel eingesetzt. Um eine vollständige Umsetzung zu gewährleisten, wird am Rückfluß 1 bis 4 Stunden gekocht. Durch diese reduktive Aufarbeitung werden primär COC mit Aldehyd- bzw. Ketogruppen zur Verfügung gestellt.

Sowohl nach der oxidativen als auch nach der reduktiven Aufarbeitung kann die Polymerlösung direkt weiterverwendet werden. Soll das Polymere als solches isoliert werden, so kann es nach bekannten Verfahren vom Lösungsmittel befreit werden:
1. Abstrippen des Lösungsmittels, z.B.durch Wasserdampfdestillation,
2. Verdampfen des Lösungsmittels, z.B. durch Sprühtrocknung oder Eindicken im Fallfilmverdampfer, der gegebenenfalls im Vakuum betrieben wird, und bevorzugt durch
3. Ausfällung in einem mit dem Polymerlösungsmittel mischbaren Nichtlösungsmittel, z.B. Methanol oder Aceton.

Besonders bevorzugt erfolgt die Isolierung des funktionalisierten COC durch Fällung mit Aceton. Zur Vermeidung der Bildung von cyclischen Peroxiden des Acetons muß hierbei sichergestellt sein, daß kein Oxidationsmittel mehr in der Lösung enthalten ist; gegebenenfalls ist noch vorhandenes Oxidationsmittel durch geeignete Reduktionsmittelzugabe zu entfernen.

Durch Waschen mit Lösungsmitteln, die das Polymere nicht auflösen, können Fremdstoffe wie z.B. Nebenprodukte leicht entfernt werden. Die Trocknung kann bei Normaldruck oder vermindertem Druck auch mit Inertgas-Überlagerung erfolgen, wobei die Temperatur unterhalb Tg gewählt werden muß, um Sintern zu vermeiden. Bevorzugt ist die Trocknung im Stickstoffstrom bei milden Temperaturen.

Alle durch oxidative oder reduktive Aufarbeitung erhaltenen Verbindungen können Folgereaktionen unterzogen werden, mittels derer weitere funktionelle Gruppen in die COC eingeführt werden.

Aus den entsprechenden Carbonsäuren können nach üblichen Labormethoden Säurechloride, Ester, Anhydride, Amide oder Hydrazide hergestellt werden [J. March: "Advanced Organic Chemistry", third edition].

Die entsprechenden Aldehyde und Ketone können z.B. zu Alkoholen reduziert werden. Die Reduktion kann katalytisch an Nickel oder Palladium erfolgen oder mit naczierendem Wasserstoff, welcher in situ durch Reaktion von Natriumamalgam und Wasser bzw. Natrium und Alkohol hergestellt wird. Besonders bevorzugt als Reduktionsmittel zur Darstellung der korrespondierenden Alkohole sind Lithiumaluminiumhydrid bzw. Natriumborhydrid. Auch Aluminiumalkoholate, z.B. Aluminiumisopropylat, sind geeignet. Die Reaktionen können wahlweise durch Zusatz von Säuren oder Basen katalysiert werden. Erfolgt die Hydrierung in Gegenwart von Ammoniak, primären oder sekundären Aminen, so erhält man die entsprechenden primären, sekundären oder tertiären Amine. Zur Darstellung dieser Systeme wird die Aminkomponente im Überschuß eingesetzt. Bevorzugt ist hierbei ein Verhältnis Molzahl Aldehyd zu Molzahl Amin von 1:10, besonders bevorzugt ist ein Verhältnis von 1,1:5,5. Bei der direkten Addition von Ammoniak, primären oder sekundären Aminen mit anschließender Abspaltung von Wasser erhält man Imine, Azomethine, Enamine oder Aminale [J. March: "Advanced Organic Chemistry", third edition].

Die erhaltenen Derivate können als Vernetzer in Pulverlacksystemen oder in sonstigen Lackkompositionen eingesetzt werden. Hierbei kann eine Überführung der Aminogruppen des COC-Derivates in die Isocyanatgruppen notwendig werden. Darüber hinaus ist eine Anwendung dieser Derivate als Polymerträger von immobilisierten Katalysatoren, z.B. zur Fixierung von Enzymen über die Hydroxy- bzw. Aminogruppen für den Einsatz in modernen Syntheseprozessen denkbar.

Unter basischer Katalyse erfolgt die Addition von Blausäure an die Aldehydgruppen des COC-Rückgrates unter Ausbildung von Cyanhydrinen (α-Hydroxynitrile), die zu α-Hydroxycarbonsäuren umgesetzt werden können. Führt man die Umsetzung in Gegenwart von äquimolaren Mengen Ammoniak oder primären und sekundären Aminen durch, so addiert sich die Blausäure an die zunächst entstehenden Iminoverbindungen. Die erhaltenen Aminonitrile ergeben bei der anschließenden sauren Verseifung α-Aminosäuren. Auf diesem Weg kann eine Biokompatibilität erreicht werden, die besonders für die Anwendung dieser Materialien im medizinischen Bereich, z.B. als Membranen, besonders vorteilhaft sein kann.
Zur Herstellung der Acetale und Halbacetale setzt man die aldehyd- bzw. ketonfunktionalisierten COC in Gegenwart von wasserfreien Mineralsäuren mit den entsprechenden Alkoholen um. Es empfiehlt sich, die Reaktion in Gegenwart von wasserbindenden Mitteln durchzuführen. Insbesondere zur Darstellung der Diethylacetale von Ketogruppen kann der Orthoameisensäuretriethylester verwendet werden. An Stelle der Alkohole können auch Thiole verwendet werden, die zu den entsprechenden Mercaptanen umgesetzt werden.

Darüber hinaus können alle bekannten Reaktionen an den Aldehyd- bzw. Ketonfunktionalitäten durchgeführt werden. Exemplarisch seien nur die Oxim-, Semicarbazon und Hydrazonbildung erwähnt, die nach den üblichen Methoden aus den entsprechenden COC mit Aldehyd bzw. Ketongruppen hergestellt werden können. Auf die Variationsmöglichkeiten durch Aldolkondensation sei ebenfalls hingewiesen [J. March: "Advanced Organic Chemistry", third edition]. Die beschriebenen Reaktionen können darüber hinaus auch als Vernetzungsreaktion ausgestaltet werden. Setzt man die entsprechenden bifunktionellen Verbindungen ein - z.B. Diole, Diamine etc. - so kann durch intermolekulare Reaktion ein Polymer-Netzwerk aufgebaut werden. Besonders für die nachträgliche Vernetzung eines Überzugsmaterials aus funktionalisierten COC ergeben sich dadurch mannigfaltige Möglichkeiten.

Die in dem erfindungsgemäßen Verfahren eingesetzten doppelbindungshaltigen Cycloolefincopolymere enthalten bevorzugt
0,1-99,89 Gew.-%, polymerisierten Einheiten eines Cycloolefins der Formel (I), (II), (III), (IV), (V), (VI) oder (VII) 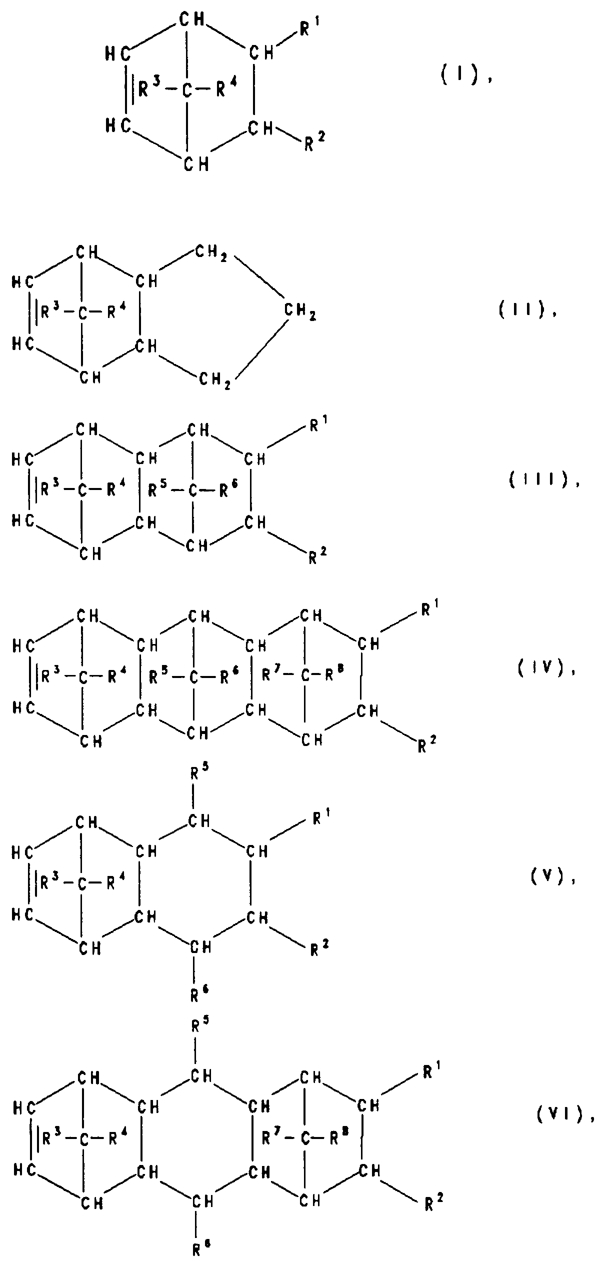 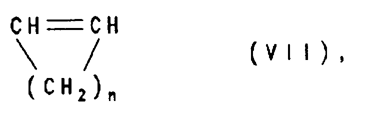
, worin R¹, R², R³, R⁴, R⁵, R⁶, R⁷ und R⁸ gleich oder verschieden sind und ein Wasserstoffatom oder einen C₁-C₃₀-Kohlenwasserstoffrest, wie eine C₁-C₈-Alkyl-Gruppe oder eine C₆-C₁₄-Aryl-Gruppe bedeuten, wobei gleiche Reste in den verschiedenen Formeln eine unterschiedliche Bedeutung haben können, und n eine Zahl von 2 bis 10 ist, und
0-80 Gew.-%, bezogen auf die Gesamtmasse des Cycloolefinpolymers, polymerisierte Einheiten mindestens eines acyclischen Mono-Olefins, bevorzugt eines α-Olefins mit 2-20 C-Atomen, besonders bevorzugt Ethylen oder Propylen,
0,01-50 Gew.-%, bezogen auf die Gesamtmasse des Cycloolefincopolymers, polymerisierte Einheiten mindestens eines Olefins, die mindestens eine Doppelbindung aufweisen, bevorzugt mindestens eines Olefins der Formeln (VIII), (IX), (X), (XI), (XII) und (XIII) 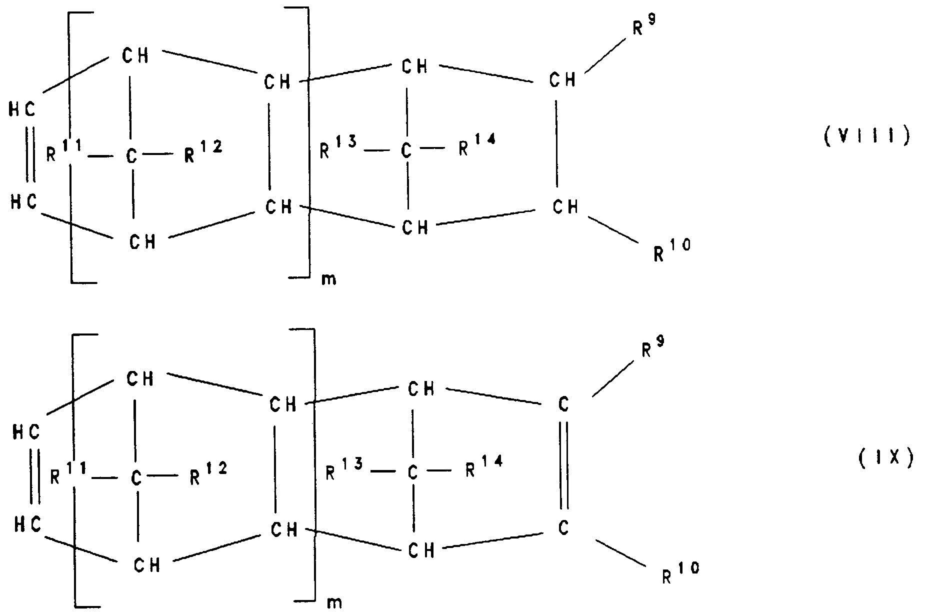 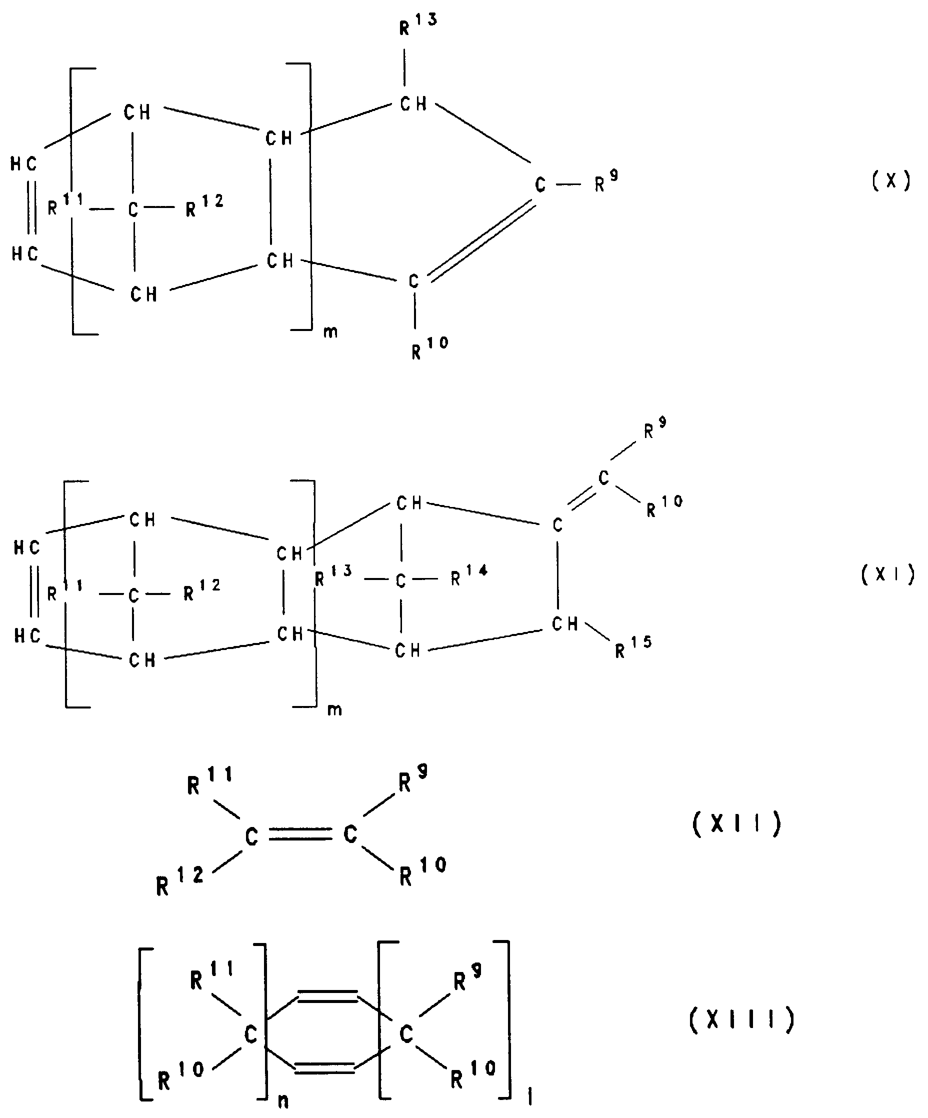
, worin R⁹, R¹⁰, R¹¹, R¹², R¹³, R¹⁴ und R¹⁵ gleich oder verschieden sind und ein Wasserstoff-Atom, einen C₁-C₃₀-Kohlenwasserstoffrest, wie eine C₁-C₈-Alkyl-Gruppe oder eine C₆-C₁₄-Aryl-Gruppe, eine C₂-C₂₀-Alkenyl-Gruppe oder eine C₈-C₂₀-Arylalkenyl-Gruppe bedeuten, wobei gleiche Reste in den verschiedenen Formeln unterschiedliche Bedeutung haben können und in den Formeln (IX) und (X) R⁹ und R¹⁰ ein Wasserstoff-Atom, ein C₁-C₃₀-Kohlenwasserstoffrest, wie eine C₁-C₈-Alkyl-Gruppe oder eine C₆-C₁₄-Aryl-Gruppe, sind, in der Formel (VIII) mindestens einer der Reste R⁹, R¹⁰, R¹¹, R¹², R¹³ und R¹⁴ eine Alkenyl-Gruppe ist, in der Formel (XII) mindestens einer der Reste R⁹, R¹⁰ R¹¹ und R¹² eine Alkenyl-Gruppe ist und m eine Zahl von 0 bis 10 ist und n, l eine Zahl von 0 bis 10 ist, mit der Maßgabe,daß nicht n=l=0 ist.

Die in dem erfindungsgemäßen Verfahren eingesetzten doppelbindungshaltigen Cycloolefincopolymere können hergestellt werden bei Temperaturen von -78°-200° C und einem Druck von 0,01-64 bar, in Gegenwart eines Katalysatorsystems, enthaltend mindestens ein Metallocen, welches vorzugsweise stereorigid ist, und mindestens einen Cokatalysator, welcher bevorzugt ein Aluminoxan, insbesondere der Formel (XX) 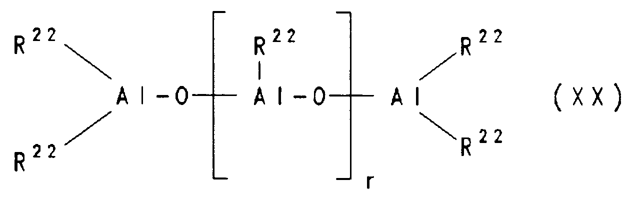
für den linearen Typ und/oder der Formel (XXI) 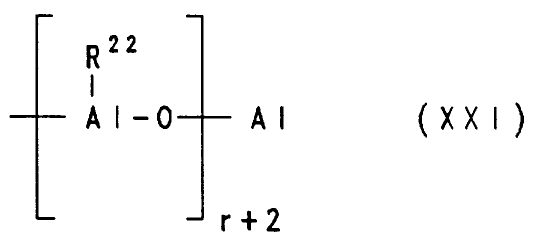
für den cyclischen Typ ist, wobei in den Formeln (XX) und (XXI) R²² ein C₁-C₂₀-Kohlenwasserstoffrest, z.B. eine C₁-C₆-Alkyl-Gruppe, eine C₆-C₁₄-Aryl-Gruppe, Phenyl oder Benzyl bedeutet und r eine ganze Zahl von 2 bis 50 ist.

Bevorzugt sind stereorigide Metallocene, wie sie beschrieben sind in P 43 44 631.0, auf die hiermit ausdrücklich Bezug genommen wird.

Außerdem bevorzugt sind Metallocene der Formel(XXII), 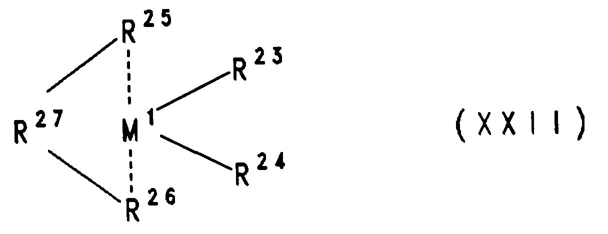
worin
- M¹: ein Metall aus der Gruppe Titan, Zirkon, Hafnium, Vanadium, Niob und Tantal ist, vorzugsweise Zirkon oder Hafnium,
- R²³ und R²⁴: gleich oder verschieden sind und ein Wasserstoff-Atom, eine C₁-C₁₀-, vorzugsweise C₁-C₃-Alkyl-Gruppe, eine C₁-C₁₀-, vorzugsweise C₁-C₃-Alkoxy-Gruppe, eine C₆-C₁₀-, vorzugsweise C₆-C₈-Aryl-Gruppe, eine C₆-C₁₀-, vorzugsweise C₆-C₈-Aryloxy-Gruppe, eine C₂-C₁₀-, vorzugsweise C₂-C₄-Alkenyl-Gruppe, eine C₇-C₄₀-, vorzugsweise C₇-C₁₀-Arylalkyl-Gruppe, eine C₇-C₄₀-, vorzugsweise C₇-C₁₂-Alkylaryl-Gruppe, eine C₈-C₄₀-, vorzugsweise C₈-C₁₂-Arylalkenyl-Gruppe oder ein Halogen-Atom, vorzugsweise Chlor bedeuten,
- R²⁵ und R²⁶: gleich der verschieden sind und einen ein- oder mehrkernigen Kohlenwasserstoffrest, welcher mit dem Zentralatom M¹ eine Sandwichstruktur bilden kann, bedeuten,
- R²⁷: eine ein- oder mehrgliedrige Brücke ist, welche die Reste R²⁵ und R²⁶ verknüpft und 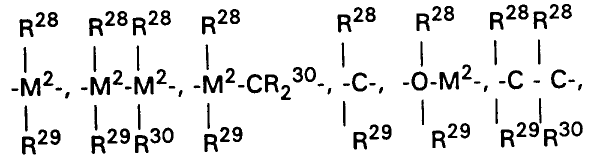 =BR²⁸, =AlR²⁸, -Ge-, -Sn-, -O-, -S-, =SO, =SO₂, = NR²⁸, =CO, =PR²⁸ oder = P(O)R²⁸ ist, wobei R²⁸, R²⁹ und R³⁰ gleich oder verschieden sind und ein Wasserstoff-Atom, ein Halogen-Atom, vorzugsweise Chlor, eine C₁-C₁₀-, vorzugsweise C₁-C₃-Alkyl-Gruppe, insbesondere Methyl-Gruppe, eine C₁-C₁₀-Fluoralkyl-Gruppe, vorzugsweise CF₃-Gruppe, eine C₆-C₁₀-Fluoraryl-Gruppe, vorzugsweise Pentafluorphenyl-Gruppe, eine C₆-C₁₀-, vorzugsweise C₆-C₈-Aryl-Gruppe, eine C₁-C₁₀-, vorzugsweise C₁-C₄-Alkoxy-Gruppe, insbesondere Methoxy-Gruppe, eine C₂-C₁₀-, vorzugsweise C₂-C₄-Alkenyl-Gruppe, eine C₇-C₄₀-, vorzugsweise C₇-C₁₀-Arylalkyl-Gruppe, eine C₈-C₄₀-, vorzugsweise C₈-C₁₂-Arylalkenyl-Gruppe oder eine C₇-C₄₀-, vorzugsweise C₇-C₁₂-Alkylaryl-Gruppe bedeuten, oder R²⁸ und R²⁹ oder R²⁸ und R³⁰ zusammen mit den sie verbindenden Atomen einen Ring bilden,
- M²: Silizium, Germanium oder Zinn ist, bevorzugt Silizium oder Germanium,
Solche Metallocene sind beschrieben in EP 0 407 870, auf die hiermit ausdrücklich Bezug genommen wird.

In Formel (XXII) ist M¹ bevorzugt Zirkonium oder Hafnium. R²³ und R²⁴ sind gleich oder verschieden und bevorzugt eine C₁-C₁₀-Alkylgruppe, insbesondere eine Methylgruppe, oder ein Halogen-Atom, insbesondere Chlor. R²⁵ und R²⁶ sind gleich oder verschieden und bevorzugt Cyclopentadienyl, 3-Methylcyclopentadienyl, Indenyl, Tetrahydroindenyl, Fluorenyl, 4,7-tert.Butylfluorenyl oder Benzoindenyl. R²⁷ ist bevorzugt = CR²⁸R²⁹, = SiR²⁸R²⁹, = GeR²⁸R²⁹, -O-, S-, = SO, = PR²⁸ oder = P(O)R²⁸, worin R²⁸ und R²⁹ ein Wasserstoffatom, eine C₁-C₁₀-Alkyl-Gruppe oder eine C₆-C₁₀-Aryl-Gruppe sind.

Insbesondere bevorzugt sind Metallocene wie 4-(η⁵-cyclopentadienyl)4,7,7-dimethyl(η⁵-4,5,6,7-tetrahydroindenyl)ZrCl₂ oder Dimethylsilandiylbis(1-indenyl)ZrCl₂.
Zur Herstellung der erfindungsgemäßen funktionalisierten COC werden doppelbindungshaltige COC eingesetzt, die durch ringerhaltende Polymerisation hergestellt wurden; d.h. durch Metathese-Polymerisation erhaltene Polymere werden hierbei nicht eingesetzt.

Im Rahmen des erfindungsgemäßen Verfahrens ist es von Vorteil, daß die Funktionalisierung der doppelbindungshaltigen COC ohne einen Molmassenabbau des Polymeren möglich ist. Die Molekulargewichtsverteilung der so zugänglichen funktionalisierten COC wird also entscheidend durch die Polymeraufbaureaktion bestimmt. Die funktionalisierten COC besitzen ferner eine wohldefinierte Anzahl funktioneller Gruppen, die ebenfalls in weiten Bereichen durch die Einsatzmengen der Monomerbausteine bei der Polymerisationsreaktion gesteuert werden kann.

Die durch Ozonolyse von doppelbindungshaltigen COC bei oxidativer bzw. reduktiver Aufarbeitung erhaltenen funktionalisierten COC zeichnen sich durch eine hervorragende Haftung auf Kunststoffen, Aluminium, Stahl und verzinktem Stahl aus. Aus diesem Grund eignen sich die erfindungsgemäßen COC besonders als direkte Überzugs- und Beschichtungsmittel zur Herstellung säurebeständiger und kratzfester Schutzschichten auf den genannten Substraten. Derartige Überzugsmittel enthalten mindestens ein erfindungsgemäßes Cycloolefincopolymer und gegebenenfalls ein oder mehrere Bindemittel, lackübliche Additive, Pigmente und/oder Füllstoffe.

Aufgrund ihrer guten Verträglichkeit und homogenen Mischbarkeit mit den in der Lacktechnologie üblicherweise verwendeten Beschichtungsmitteln, welche Ein- oder Zweikomponenten - Bindemittel enthalten, eignen sich die erfindungsgemäßen COC darüberhinaus auch als Haftvermittler für die Lackierung von beispielsweise Kunststoffen mit diesen Beschichtungsmitteln. Nach dem Aufbringen auf das zu lackierende Werkstoffteil ist eine Härtung mit den entsprechenden Vernetzern möglich. Die so hergestellten Filme besitzen eine hohe Transparenz, Wärmeformbeständigkeit und Härte sowie einen hohen Oberflächenglanz. Außerdem zeigen sie eine im Vergleich zu den Standardlacken verbesserte Säurebeständigkeit und eine höhere Kratzfestigkeit.

Als Bindemittel können dabei beispielsweise Ein- oder Zweikomponenten Polyurethansysteme, Epoxidharze, Alkydharze, Melaminharze, gesättigte oder ungesättigte Polyesterharze, mittels Bestrahlung oder thermischer Behandlung oder mittels Radikal-Initiatoren vernetzbare Acrylatsysteme, Zwei-Komponenten OH-funktionelle Acrylat-Polyurethansysteme, thermoplastische Polyacrylate wie Polymethylmethacrylat, Nitrocellulose, Kautschuktypen oder Polyamidharze verwendet werden. Grundsätzlich möglich ist auch die Verwendung von Bindemittelgemischen, die mehr als ein Bindmitteltyp der genannten Art enthalten. Bevorzugt ist der Einsatz von Polyurethansystemen oder Polyacrylatsystemen als Ein- oder Zweikomponenten-Bindemitteln. Solche Polyacrylatsysteme sind in den noch nicht veröffentlichten deutschen Patentanmeldungen mit den Aktenzeichen P 43 44 515 und P 43 44 516 beschrieben, auf die hiermit ausdrücklich Bezug genommen wird. Die funktionalisierten COC werden, soweit sie als Haftvermittler eingesetzt werden, in Mengen von 2 bis 60, vorzugsweise 15 bis 40 Gew. %, bezogen auf das Gewicht des Bindemittels eingesetzt.

Vorzugsweise werden die Beschichtungsmittel aus Lösung verarbeitet, wobei als organisches Lösungsmittel beispielsweise Butylacetat, Methylethylketon, Methylisobutylketon, Methoxypropylacetat, Toluol, Xylol oder Gemische derartiger Lösungsmittel verwendet werden können. Darüber hinaus können die Systeme auch in lösungsmittelarmen oder lösungsmittelfreien, insbesondere wäßrigen Beschichtungsmitteln eingesetzt werden. Dabei ist die Verwendung als Haftvermittler in Pulverlackanwendungen auch denkbar. Eine gute Übersicht über die möglichen Beschichtungsmitteln findet sich in "Organic Coatings, Science and technology", Volume 8 (1986).
Die Erfindung wird durch folgende Beispiele näher erläutert.

### Beispiele:

Es bedeuten:
eta = Lösungsviskosität (Decalin, 135°C, gemäß DIN 53728) in dl/g,
M_{w} = Gewichtsmittel des Molekulargewichts in g/mol.
M_{w}/Mₙ = Polydispersität, gemessen mit Gelpermeationschromatographie (o-Dichlorbenzol, 135°C, Polystyrolstandard),
Äquivalentgewicht (ÄG) = g Polymer/mol funktionelle Gruppe (titrimetrisch bestimmt)
JZ = Jodzahl (g Jod/100g Polymer)
SZ = Säurezahl (mg KOH/ g Polymer)
Beispiele 1 beschreibt die Herstellung der Ausgangsverbindungen:

### Beispiel 1

Ein sauberer und trockener 1,5 dm³ Polymerisationsreaktor mit Rührer wurde mit Stickstoff und dann mit Ethylen gespült und mit 0,6 dm³ einer 85 %igen Lösung von Norbornen in Toluol gefüllt. Es wurden 60 ml 5 Vinylnorbornen-2 zugegeben. Der Ethylendruck wurde auf 6 bar Überdruck eingestellt. Weiterhin wurden 180 cm³ Wasserstoff zugegeben und die Temperatur auf 70°C eingestellt.12 mg Diphenylmethylen(cyclopentadienyl)(9-fluorenyl)-zirkondichlorid wurden in 20 cm³ einer toluolischen Methylaluminoxanlösung (10 Gew.-% Methylaluminoxan mit Molmasse von 1300 g/mol nach kryoskopischer Bestimmung) gelöst und anschließend in den Reaktor dosiert. Der Ethylendruck wurde durch Nachdosieren bei 6 bar gehalten. Nach einer Stunde Polymerisationszeit wurde der Reaktorinhalt in ein Gefäß abgelassen und mit 5 cm³ Isopropanol versetzt.

Die Lösung wurde mit 10 g ®Celite 545 (LuV, Hamburg) und 5 cm³ Wasser versetzt und 30 min bei 60°C gerührt. Auf dem Filtergewebe einer 2 l Drucknutsche wurde ein Filterkuchen aus 10 g ®Celite, suspendiert in 0,5 dm³ Toluol, aufgebaut. Die Polymerlösung wurde über die Drucknutsche filtriert, wobei ca. 1 bar Stickstoffdruck aufgebaut wurden. Die klare Lösung wurde in 5 dm³ Aceton mit Hilfe eines Dispergators (Fa. Kotthoff) eingetragen. Der Feststoff wurde durch Filtration isoliert, noch zweimal in Aceton dispergiert und anschließend bei 100°C und reduziertem Druck (0,2 bar) 15 Stunden getrocknet. Es wurden 90 g Polymer erhalten, das 50 mol-% Ethylen-, 45 mol-% Norbornen- und 5 mol-% Vinylnorbornen-Repetiereinheiten enthält. Die Glastemperatur war 151°C, eta betrug 0,15 dl/g (DIN 53728). M_{w} = 9700 g/mol und M_{w}/Mₙ = 2,2. Es wurde eine Jodzahl von 15,5 bestimmt (ÄG = 1640 g/mol C=C).

Beispiel 2 beschreibt die Herstellung eines funtkionalisierten COC

### Beispiel 2

110 g (65 mmol) COC aus Beispiel 1 werden in einer Mischung aus 500 ml Chloroform und 50 Methanol gelöst. Die Lösung wird auf eine Temperatur von -7 bis -10°C gekühlt. Diese Temperatur wird auch während der folgenden Ozonbegasung beibehalten. Bei einer Strömungsgeschwindigkeit von 100 Liter pro Stunde und einer Ozonkonzentration von 49 bis 61 g Ozon pro Kubikmeter Sauerstoff wird eine dem Doppelbindungsanteil des COC äquimolare Menge Ozon eingeleitet. Das Ozon wird mit einem Ozonerzeuger (Modell 503 der Fa. Fischer in Mekkenheim bei Bonn sowie Ozonmeßgerät, Ozontron 23 desselben Herstellers) in trockener Luft oder Sauerstoff hergestellt. Nach Abschluß der Begasung werden bei -5°C weitere 85 ml Methanol und dann bei 0°C 43 ml Peressigsäure zugegeben. Danach wird die Temperatur langsam auf 50°C erhöht. Bei dieser Temperatur wird die Reaktionslösung 2 Stunden gerührt. Anschließend läßt man abkühlen, wäscht mit 200 ml Wasser und erhitzt mit 100 ml Wasser für eine Stunde zum Rückfluß. Die Wasserphase wird abgetrennt, die organische Phase mit 100 ml Wasser gewaschen. Die Isolierung des carboxy-funktionalisierten COC erfolgt durch Fällung mit Aceton und anschließende Trocknung im Vakuum bei milden Temperaturen.
Auswaage: 80 g; Iodzahl: 15; Säurezahl: 33

### Untersuchungder Hafteigenschaften des hergestellten funktionalisierten COC

Jeweils 10g der Polymeren aus Beispiel 4-6 werden in 100 ml Toluol bei 80 °C gelöst und die Lösungen auf Glasplatten bzw. auf Stahlplatten bzw. auf Polypropylenplatten aufgerakelt. Diese Platten werden zunächst 4 h bei Raumtemperatur im Umlufttrockenschrank und anschließend 24 h bei 80 °C im Vakuumtrockenschrank getrocknet.

Zur Beurteilung der Haftung dieser Filme auf den unterschiedlichen Substraten werden folgende qualitative Tests durchgeführt:
- a:: Fingernagelprobe: Prüfung auf mechanische Ablösung des Films mit Hilfe des Fingernagels.
- b:: ®Tesa-Film-Test: Prüfung auf mechanische Ablösung des Films durch ruckartige Entfernung eines aufgeklebten ®Tesa-Films (scotch tape test).
- c:: Gitterschnitt-Test: Die Filme werden mit Hilfe eines scharfen Messers mehrfach kreuzweise eingeritzt. Anschließend wird auf mechanische Ablösung des Films durch ruckartiges Entfernen eines auf dieses Gitter aufgeklebten ®Tesa-Films geprüft.

Die Ergebnisse dieser Tests sind in Tabelle 1 zusammengefaßt. Zusätzlich sind auch die Ergebnisse der unmodifizierten COC aufgeführt.

**Tabelle 1**

| Untersuchungen der Hafteigenschaften der COC-Filme | | | | | |
|---|---|---|---|---|---|
| **Beispiel** | **COC** | **Substrat** | **Fingernagelprobe** | **scotch tape** | **Gitterschnitt** |
| 3 | COC II | Glas | + + | + + | + + |
| 4 | COC II | Stahl | + + | + + | + + |
| 5 | COC II | PP | + + | + + | + + |
| 6 | COC I | Glas | -- | -- | -- |
| 7 | COC I | Stahl | -- | -- | -- |
| 8 | COC I | PP | -- | -- | -- |
| Legende: Folgende Abkürzungen werden benutzt: Polymer aus Beispiel 1 = COC I Polymer aus Beispiel 2 = COC II + + = sehr gute Haftung. Die Filme überstehen unbeschadet die angegebene Testmethode. -- = sehr schlechte Haftung. Die Filme werden durch die angegebenen Testmethoden teilweise zerstört. | | | | | |

Es wurde eine 200 * 50 mm handelsübliche EPDM-modifizierte Polypropylen-Platte der Firma Hoechst AG verwendet.

## Patentansprüche

1. Cycloolefincopolymer mit einer Lösungsviskosität (eta) > 0.25 dl/g (gemessen gemäß DIN 53 728 in Decalin bei 135°C), enthaltend polymerisierte Einheiten (A) mindestens eines cyclischen Olefins und (B) gegebenenfalls eines oder mehrerer acyclischer Olefine, dadurch gekennzeichnet, daß (C) polymerisierte Einheiten enthalten sind, welche mindestens eine funktionalisierte Struktureinheit enthalten, die sich
a) von einem cyclischen Olefin ableitet und mindestens ein Heteroatom enthält, das direkt an ein Ringatom des cyclischen Olefins gebunden ist, oder
b) von einem cyclischen oder acyclischen Olefin ableitet und mindestens eine Atomgruppe enthält, die zwei Heteroatome aufweist, die beide an dasselbe Kohlenstoff-Atom gebunden sind, oder
c) von einem cyclischen oder acyclischen Olefin ableitet und mindestens eine Aldehyd-Gruppe enthält, oder
d) von einem cyclischen oder acyclischen Olefin ableitet und mindestens eine Atomgruppe enthält, in der ein Stickstoff-Atom über eine Doppelbindung an ein Kohlenstoff-Atom gebunden ist,
wobei für den Fall, daß sich die funktionalisierte Struktureinheit von einem cyclischen Olefin ableitet, genau zwei einander benachbarte Kohlenstoff-Atome dieser funktionalisierten cyclischen Struktureinheit in die Polymerhauptkette eingebaut sind.

2. Cycloolefincopolymer nach Anspruch 1, dadurch gekennzeichnet, daß es 0,1-99,89 Gew.-%, bezogen auf die Gesamtmasse des Cycloolefincopolymers. polymerisierte Einheiten (A) mindestens eines cyclischen Olefins,
0-80 Gew.-%, bezogen auf die Gesamtmasse des Cycloolefincopolymers, polymerisierte Einheiten (B) mindestens eines acyclischen Olefins und
0,01-50 Gew.-%, bezogen auf die Gesamtmasse des Cycloolefincopolymers, polymerisierte Einheiten (C) enthält, welche mindestens eine funktionalisierte Struktureinheit enthalten.

3. Cycloolefincopolymer nach Anspruch 1 oder 2, dadurch gekennzeichnet, daß sich die polymerisierten Einheiten (A) von mindestens einer Verbindung der Formeln (I), (II), (III), (IV), (V), (VI) oder (VII) ableiten 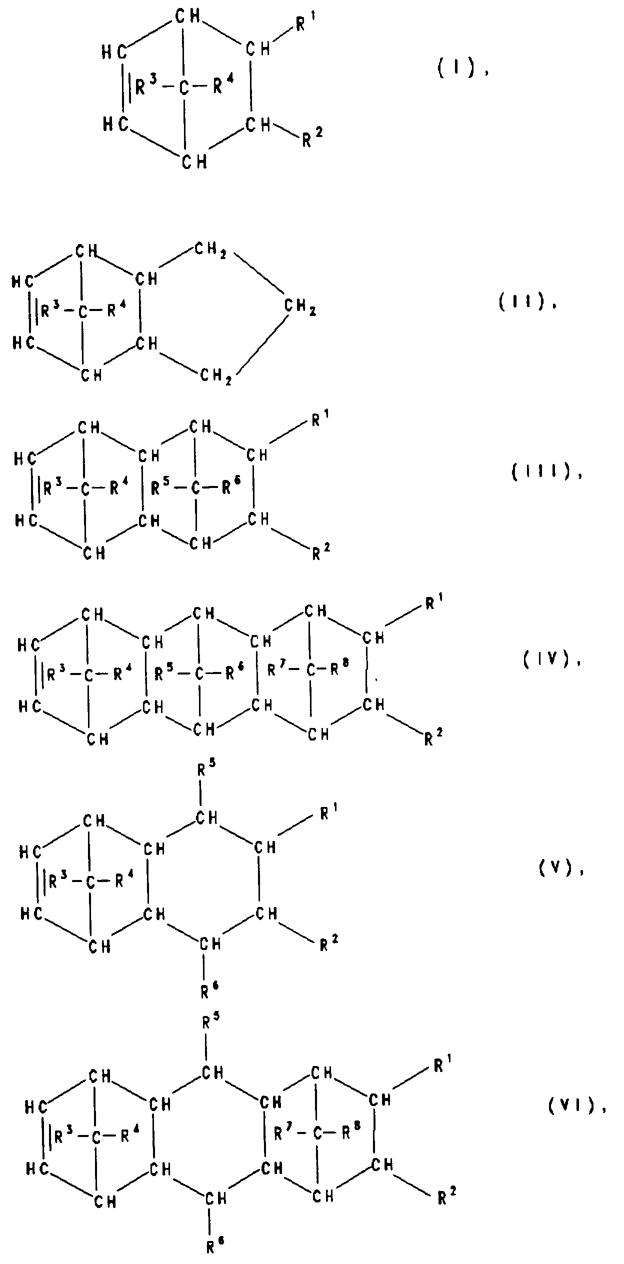 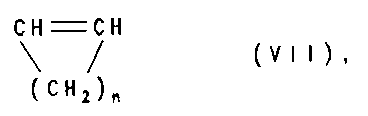 worin R¹, R², R³, R⁴, R⁵, R⁶, R⁷ und R⁸ gleich oder verschieden sind und ein Wasserstoffatom oder einen C₁-C₃₀-Kohlenwasserstoffrest, wie eine C₁-C₈-Alkyl-Gruppe oder eine C₆-C₁₄-Aryl-Gruppe, bedeuten, wobei gleiche Reste in den verschiedenen Formeln eine unterschiedliche Bedeutung haben können, und n eine Zahl von 2 bis 10 ist.

4. Cycloolefincopolymer nach einem oder mehreren der Ansprüche 1 bis 3, dadurch gekennzeichnet, daß sich die polymerisierten Einheiten (B) von einem α-Olefin mit 2-20 Kohlenstoff-Atomen ableiten.

5. Cycloolefincopolymer nach einem oder mehreren der Ansprüche 1 bis 4, dadurch gekennzeichnet, daß sich die polymerisierten Einheiten (C) von mindestens einer Verbindung der Formeln (XIV), (XV), (XVI), (XVII), (XVIII) oder (XIX) ableiten, 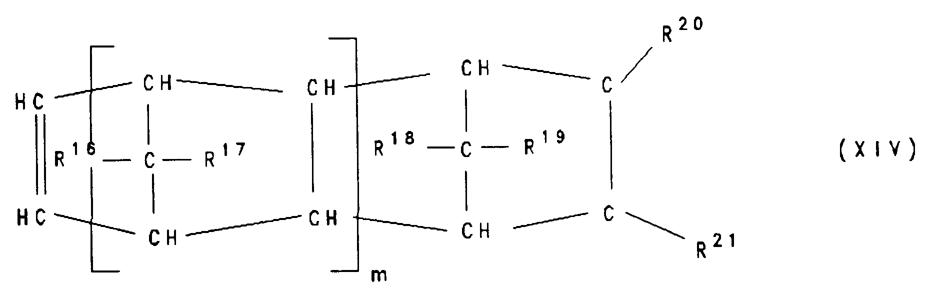 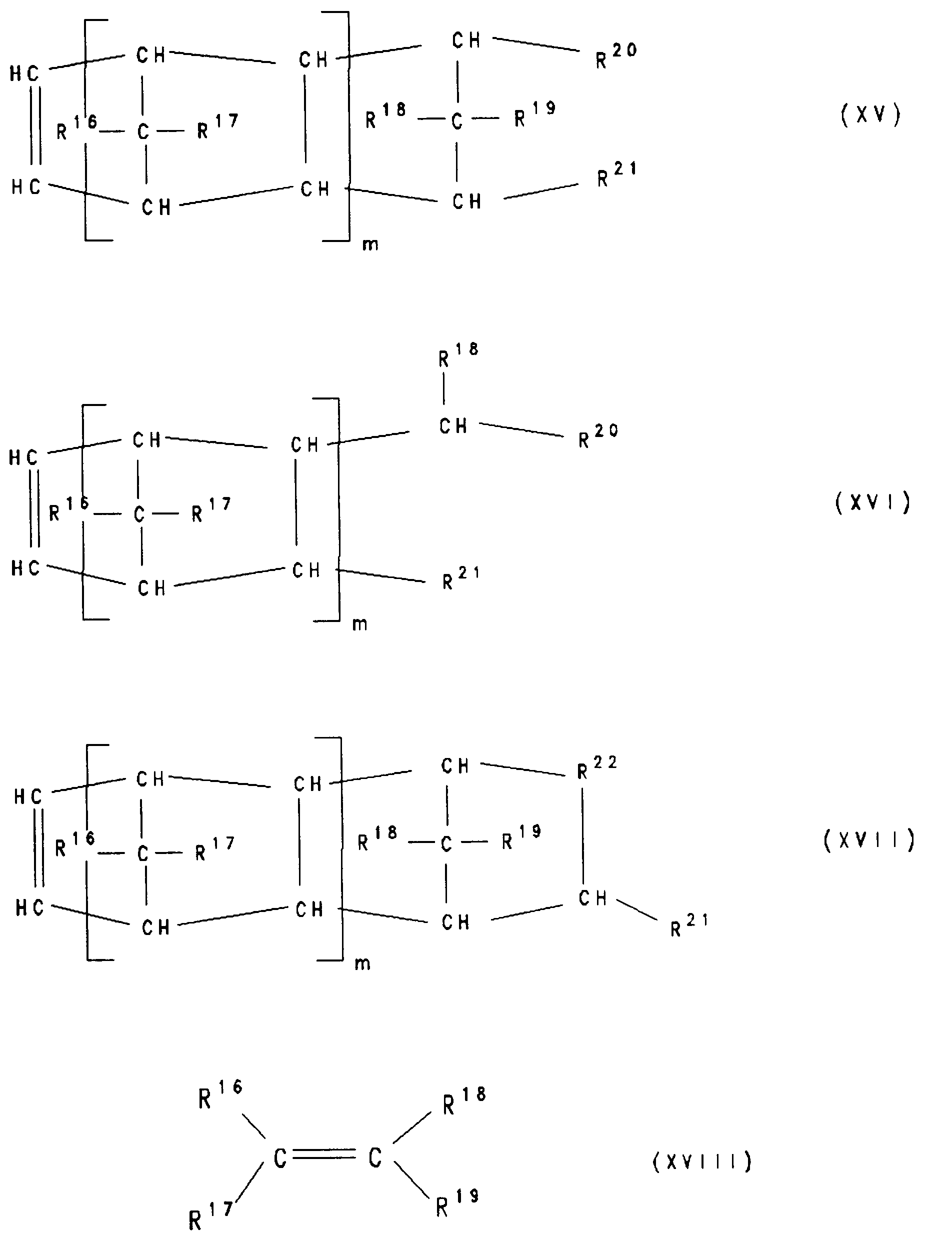 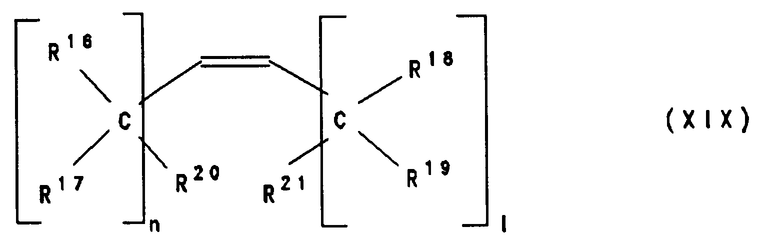 worin R²² eine Carbonyl-Gruppe,eine Hydroxyiminomethyl-Gruppe, eine Hydrazonomethyl-Gruppe oder eine Semicarbazononmethyl-Gruppe ist und R¹⁶, R¹⁷, R¹⁸, R¹⁹, R²⁰ und R²¹ gleich oder verschieden sind, gleiche Reste in den verschiedenen Formeln unterschiedliche Bedeutungen haben können und Wasserstoff, ein C₁-C₃₀-Kohlenwasserstoffrest, eine primäre-, sekundäre- oder tertiäre Amino-Gruppe, eine substituierte oder unsubstituierte Ammonium-Gruppe, eine Hydroxy-Gruppe, eine Alkyloxy-Gruppe, eine Aryloxy-Gruppe, eine Aralkyloxy-Gruppe oder eine Gruppe -(X)ₚ-Y sind, wobei X eine verzweigte oder unverzweigte C₂-C₂₀-Alkylen-Gruppe oder eine verzweigte oder unverzweigte C₈-C₂₀-Arylalkylen-Gruppe und p=0 oder 1 ist und Y eine Carboxy-Gruppe, eine Alkyloxycarbonyl-Gruppe, eine Carbamoyl-Gruppe, eine Mono- oder Bisalkylcarbamoyl-Gruppe, eine Chlorformyl-Gruppe, eine Acyloxycarbonyl-Gruppe, eine Thiocarboxy-Gruppe, eine Alkylthiocarbonyl-Gruppe, eine Formyl-Gruppe, eine Alkylformyl-Gruppe, eine Hydroxybis(alkyloxy)-methyl-Gruppe, eine Tris(alkyloxy)methyl-Gruppe, eine Hydroxyiminomethyl-Gruppe, eine Hydrazonomethyl-Gruppe oder eine Semicarbazonomethyl-Gruppe, wobei in den Formeln (XIV) und (XVIII) mindestens einer der Reste R¹⁶, R¹⁷, R¹⁸, R¹⁹, R²⁰ und R²¹, in den Formeln (XV), (XVI) und (XIX) mindestens zwei der Reste R¹⁶, R¹⁷, R¹⁸, R¹⁹, R²⁰ und R²¹ und in Formel (XVII) keiner der Reste R¹⁶, R¹⁷, R¹⁸, R¹⁹, R²⁰ und R²¹ eine Gruppe -(X)ₚ-Y, eine primäre, sekundäre- oder tertiäre Amino-Gruppe, eine substituierte oder unsubstituierte Ammoniumgruppe, eine Hydroxy-Gruppe, eine Alkyloxy-Gruppe, eine Aryloxy-Gruppe oder eine Aralkyloxy-Gruppe ist, wobei
in den Formeln (XV) und (XVI) p=0 ist, wenn R²⁰ oder R²¹ eine Gruppe -(X)ₚ-Y darstellen, und in Formel (XIX) R²⁰ und R²¹ nicht Wasserstoff oder ein C₁-C₃₀-Kohlenwasserstoffrest sind.

6. Cycloolefincopolymer nach einem oder mehreren der Ansprüche 1 bis 5, dadurch gekennzeichnet, daß sich die polymerisierten Einheiten (C) ableiten von Verbindungen der Formeln (XIV) bis (XIX), worin R²² eine Carbonyl-Gruppe ist und R¹⁶, R¹⁷, R¹⁸, R¹⁹, R²⁰ und R²¹ gleich oder verschieden sind, gleiche Reste in den verschiedenen Formeln unterschiedliche Bedeutungen haben können und eine primäre-, sekundäre- oder tertiäre Amino-Gruppe, eine Hydroxy-Gruppe oder eine Gruppe -(X)ₚ-Y sind, worin X eine verzweigte oder unverzweigte C₂-C₂₀-Alkylen-Gruppe oder eine verzweigte oder unverzweigte C₈-C₂₀-Arylalkylen-Gruppe und p=0 oder 1 ist und Y eine Carboxy-Gruppe oder eine Formyl-Gruppe ist, wobei in den Formeln (XIV) und (XVIII) mindestens einer der Reste R¹⁶, R¹⁷, R¹⁸, R¹⁹, R²⁰ oder R²¹, in den Formeln (XV), (XVI) und (XIX) mindestens zwei der Reste R¹⁶, R¹⁷, R¹⁸, R¹⁹, R²⁰ oder R²¹ und in Formel (XVII) keiner der Reste R¹⁶, R¹⁷, R¹⁸, R¹⁹, R²⁰ und R²¹ eine primäre-, sekundäre- oder tertiäre Amino-Gruppe, eine Hydroxy-Gruppe oder eine Gruppe - (X)ₚ-Y ist und in den Formeln (XV) und (XVI) p=0 ist, wenn R²⁰ oder R²¹ eine Gruppe -(X)ₚ-Y darstellt.

7. Verfahren zur Herstellung eines Cycloolefincopolymers mit einer Lösungsviskosität (eta) > 0.25 dl/g (gemessen gemäß DIN 53728 in Decalin bei 135°C), welches polymerisierte Einheiten (A) mindestens eines cyclischen Olefins und (B) gegebenenfalls eines oder mehrerer acyclischer Olefine enthält und (C) polymerisierte Einheiten enthält, welche mindestens eine funktionalisierte Struktureinheit enthalten, die sich
a) von einem cyclischen Olefin ableitet und mindestens ein Heteroatom enthält, das direkt an ein Ringatom des cyclischen Olefins gebunden ist, oder
b) von einem cyclischen oder acyclischen Olefin ableitet und mindestens eine Atomgruppe enthält, die zwei Heteroatome aufweist, die beide an dasselbe Kohlenstoff-Atom gebunden sind, oder
c) von einem cyclischen oder acyclischen Olefin ableitet und mindestens eine Aldehyd-Gruppe enthält, oder
d) von einem cyclischen oder acyclischen Olefin ableitet und mindestens eine Atomgruppe enthält, in der ein Stickstoff-Atom über eine Doppelbindung an ein Kohlenstoff-Atom gebunden ist,
wobei für den Fall, daß sich die funktionalisierte Struktureinheit von einem cyclischen Olefin ableitet, genau zwei einander benachbarte Kohlenstoff-Atome dieser funktionalisierten cyclischen Struktureinheit in die Polymerhauptkette eingebaut sind, dadurch gekennzeichnet, daß ein doppelbindungshaltiges Cycloolefincopolymer in einem inerten Lösungsmittel mit Ozon umgesetzt wird.

8. Verfahren nach Anspruch 7, dadurch gekennzeichnet, daß das doppelbindungshaltige Cycloolefincopolymer enthält,
0,1-99,9 Gew.-%, polymerisierten Einheiten eines Cycloolefins der Formel (I), (II), (III), (IV), (V), (VI) oder (VII) 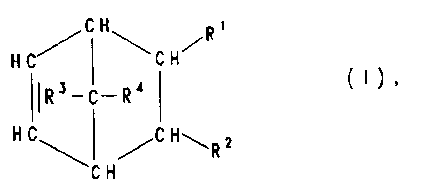 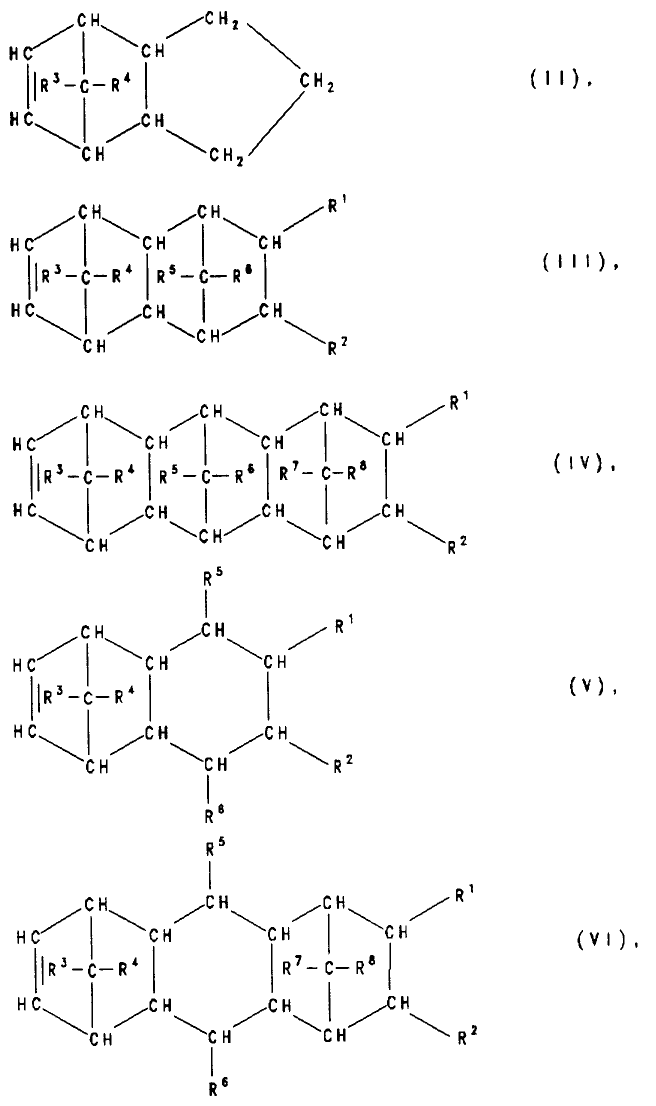 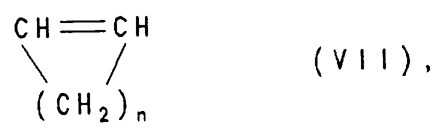 0-80 Gew.-%, bezogen auf die Gesamtmasse des Cycloolefinpolymers, polymerisierte Einheiten mindestens eines acyclischen Mono-Olefins und
0,1-99,9 Gew.-%, bezogen auf die Gesamtmasse des Cycloolefincopolymers, polymerisierte Einheiten mindestens eines Olefins, die mindestens eine Doppelbindung aufweisen, bevorzugt mindestens eines Olefins der Formeln (VIII), (IX), (X), (XI), (XII) und (XIII).

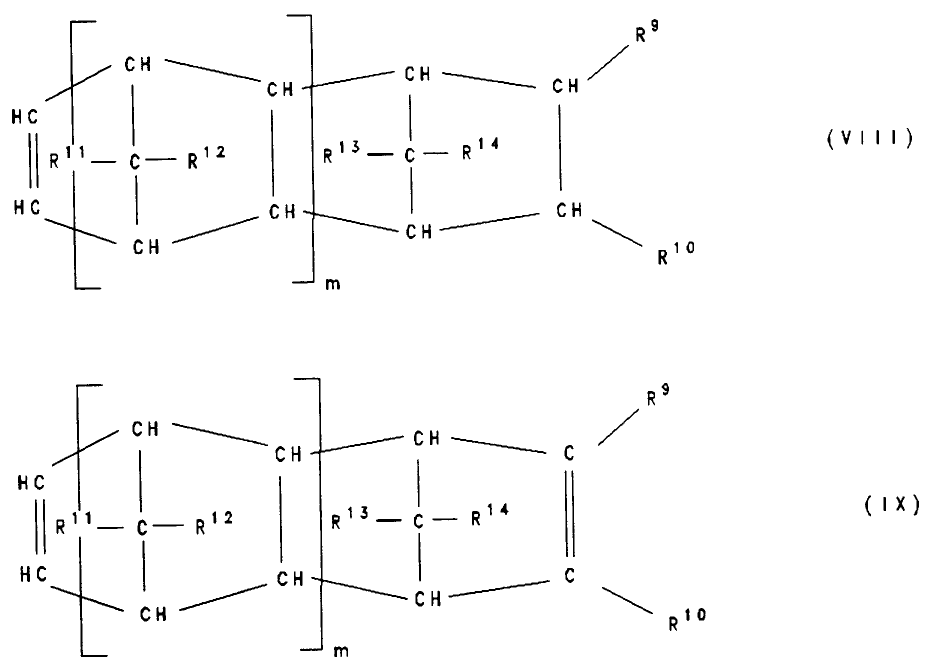

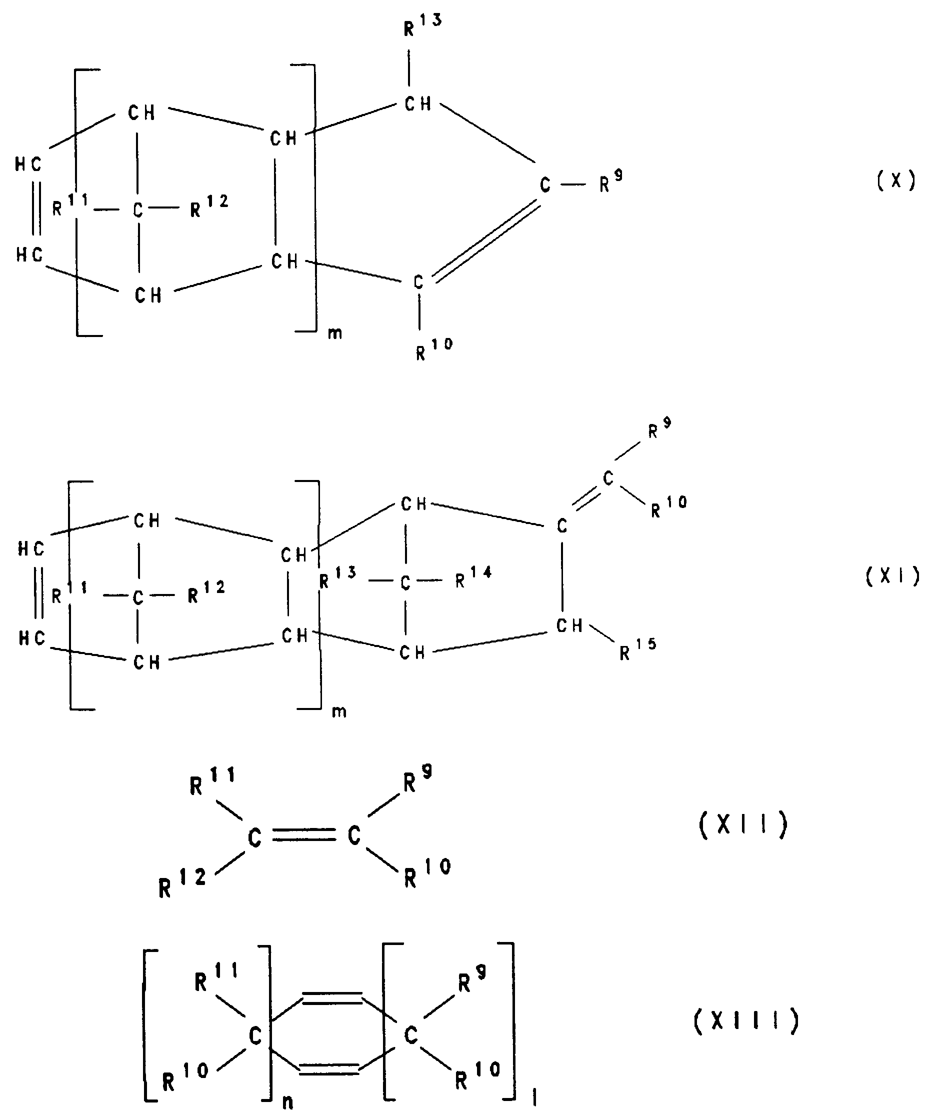

9. Überzugsmaterial, enthaltend mindestens ein Cycloolefincopolymer nach einem oder mehreren der Ansprüche 1 bis 6 und gegebenenfalls ein oder mehrere Bindemittel, lackübliche Additive, Pigmente und/oder Füllstoffe.

10. Haftvermittler, enthaltend mindestens ein Cycloolefincopolymer nach einem oder mehreren der Ansprüche 1 bis 6.
